# EUROPÄISCHE PATENTANMELDUNG

(11) **EP 3 816 414 A1**
(43) Veröffentlichungstag der Anmeldung: **05.05.2021**
(21) Anmeldenummer: 20204500.1
(22) Anmeldetag: 28.10.2020
(51) Int. Cl.: F01K 27/02

(54) **WÄRMEGEWINNUNGSVORRICHTUNG UND VERFAHREN ZUM BETREIBEN EINER WÄRMEGEWINNUNGSVORRICHTUNG**

(30) Priorität: 30.10.2019 DE 102019129351
(71) Anmelder: Deutsches Zentrum für Luft- und Raumfahrt e.V., 53227 Bonn-Oberkassel (DE)
(72) Erfinder: Gentner, Christoph, 22767 Hamburg (DE)
(74) Vertreter: Hoeger, Stellrecht & Partner Patentanwälte mbB

(57) **Zusammenfassung**

Die Erfindung betrifft eine Wärmegewinnungsvorrichtung, umfassend einen mittels eines Umgebungsmediums (22) infolge einer Relativbewegung des Umgebungsmediums (22) und der Wärmegewinnungsvorrichtung (10) angetriebenen Antriebskörper (28), eine mit dem Antriebskörper (28) insbesondere mechanisch gekoppelte Verzögerungseinrichtung (38) und eine mit dem Antriebskörper (28) über eine Kupplungseinrichtung (64) insbesondere mechanisch gekoppelte Wärmepumpeneinrichtung (62), eine Strömungseinrichtung (50) zum Führen eines Wärmeträgermediums, das zum Aufnehmen von Wärme in thermischem Kontakt mit der Verzögerungseinrichtung (38) und der Wärmepumpeneinrichtung (62) steht oder bringbar ist, wobei die Wärme einem Verbraucher (14) direkt oder indirekt zuführbar ist, und eine mit der Kupplungseinrichtung (64) und der Strömungseinrichtung (50) in Wirkverbindung stehende Steuereinrichtung (40) zum Steuern und/oder Regeln des Betriebs der Wärmegewinnungsvorrichtung (10). Außerdem betrifft die Erfindung ein Verfahren zum Betreiben einer Wärmegewinnungsvorrichtung.

## Beschreibung

Die vorliegende Erfindung betrifft eine Wärmegewinnungsvorrichtung, umfassend einen mittels eines Umgebungsmediums infolge einer Relativbewegung des Umgebungsmediums und der Wärmegewinnungsvorrichtung angetriebenen Antriebskörper und eine mit dem Antriebskörper insbesondere mechanisch gekoppelte Verzögerungseinrichtung.

Außerdem betrifft die vorliegende Erfindung ein Verfahren zum Betreiben einer derartigen Wärmegewinnungsvorrichtung.

Es sind Wärmegewinnungsvorrichtungen der eingangs genannten Art bekannt, die windgespeist sind und als sogenannte windthermische Energiesysteme bezeichnet werden. Dabei ist die Wärmegewinnungsvorrichtung stationär, und der Antriebskörper umfasst ein von strömender Luft als Umgebungsmedium angetriebenes Windrad. Die Verzögerungseinrichtung, auch als "Retarder" bezeichnet, wird eingesetzt, um eine Drehzahl des Windrades einzustellen. Dies dient zur Erhöhung der Betriebssicherheit der Vorrichtung. Bei hoher Last kann die Verzögerungseinrichtung, auch bei der vorliegenden Wärmegewinnungsvorrichtung, vorzugsweise selektiv Leistung vom Antriebskörper aufnehmen und einen zuverlässigen Betrieb der Vorrichtung sicherstellen.

Bekannt ist es auch, dass ein Wärmeträgermedium eingesetzt wird, das mit der Verzögerungseinrichtung in thermischem Kontakt steht. Insbesondere kann eine Warmseite der Verzögerungseinrichtung mit dem Wärmeträgermedium beaufschlagt werden, um Abwärme aufzunehmen. Mittels einer Strömungseinrichtung kann diese Wärme einem Verbraucher zugeführt werden.

Zu den Verbrauchern können beispielsweise Heizanlagen zählen, die über einen Wärmetauscher vom Wärmeträgermedium beheizt werden. Die Wärmegewinnungsvorrichtung kann zu diesem Zweck zum Beispiel zur dezentralen Wärmeversorgung eingesetzt werden. Andere Beispiele für Verbraucher sind im vorliegenden Fall thermische Speicher, in denen ein erwärmtes Fluid vorgehalten werden kann. Denkbar ist auch die Beladung eines thermischen Feststoffspeichers, zum Beispiel eines Schüttgutspeichers und insbesondere eines Regeneratorspeichers.

Bekannt ist auch der Einsatz von Feststoffspeichern, die zur Wärmespeicherung elektrisch beaufschlagt werden. In diesem Fall wird die Antriebsleistung des Antriebskörpers generatorisch umgesetzt. Es besteht bei derartigen Speichern die Möglichkeit der Rückverstromung.

Aufgabe der vorliegenden Erfindung ist es, eine Wärmegewinnungsvorrichtung bereitzustellen, die eine hohe Vielseitigkeit im Einsatz abhängig von äußeren Bedingungen und der vorgesehenen Nutzung aufweist. Außerdem ist es Aufgabe der vorliegenden Erfindung, ein Verfahren zum Betreiben einer derartigen Wärmegewinnungsvorrichtung bereitzustellen.

Diese Aufgabe wird durch eine erfindungsgemäße Wärmegewinnungsvorrichtung gelöst, umfassend einen mittels eines Umgebungsmediums infolge einer Relativbewegung des Umgebungsmediums und der Wärmegewinnungsvorrichtung angetriebenen Antriebskörper, eine mit dem Antriebskörper insbesondere mechanisch gekoppelte Verzögerungseinrichtung und eine mit dem Antriebskörper über eine Kupplungseinrichtung insbesondere mechanisch gekoppelte Wärmepumpeneinrichtung, eine Strömungseinrichtung zum Führen eines Wärmeträgermediums, das zum Aufnehmen von Wärme in thermischem Kontakt mit der Verzögerungseinrichtung und der Wärmepumpeneinrichtung steht oder bringbar ist, wobei die Wärme einem Verbraucher direkt oder indirekt zuführbar ist, und eine mit der Kupplungseinrichtung und der Strömungseinrichtung in Wirkverbindung stehende Steuereinrichtung zum Steuern und/oder Regeln des Betriebs der Wärmegewinnungsvorrichtung.

Bei der erfindungsgemäßen Wärmegewinnungsvorrichtung kommt zusätzlich zur Verzögerungseinrichtung eine Wärmepumpeneinrichtung zum Einsatz, vorzugsweise eine Kompressionswärmepumpeneinrichtung. Die Wärmepumpeneinrichtung ist mit dem Antriebskörper gekoppelt oder koppelbar. Dies bietet die Möglichkeit, eine Antriebsleistung des Antriebskörpers nicht nur auf die Verzögerungseinrichtung zu übertragen, sondern auch, über die Kupplungseinrichtung, auf die Wärmepumpeneinrichtung. Die Wärmepumpeneinrichtung ermöglicht eine im Vergleich zur Verzögerungseinrichtung üblicherweise höhere Wärmeleistung (Wärmemenge pro Zeiteinheit) und/oder eine größere Temperatursteigerung. Zusätzlich ist die Strömungseinrichtung vorgesehen, über die das Wärmeträgermedium bereitgestellt werden kann. Das Wärmeträgermedium kann in thermischem Kontakt mit der Verzögerungseinrichtung und der Wärmepumpeneinrichtung stehen oder gebracht werden. Hierbei besteht insbesondere ein thermischer Kontakt mit einer Warmseite der Verzögerungseinrichtung (beispielsweise Abwärme eines Retarders) und/oder einer Warmseite der Wärmepumpeneinrichtung (beispielsweise einem Kondensator der Wärmepumpeneinrichtung, an dem ein Wärmeträgermedium des internen Kreislaufs der Wärmepumpeneinrichtung unter Abgabe von Wärme kondensiert) .

Vorstehende Konfiguration bietet die Möglichkeit eines vielseitigen Einsatzes der Wärmegewinnungsvorrichtung. Über die Wärmepumpeneinrichtung wird zusätzlich zur Verzögerungseinrichtung ein weiterer Freiheitsgrad zur Einstellung eines bestmöglichen Betriebspunktes bereitgestellt. Diese Kopplung auf der Seite der Antriebsleistung zwischen der Verzögerungseinrichtung und der Wärmepumpeneinrichtung wird vorteilhaft ergänzt durch die Kopplung auf der Abwärmeseite mittels des Wärmeträgermediums. Der Betrieb kann mittels der Steuereinrichtung gesteuert und/oder geregelt werden, indem die diese vorzugsweise je nach Umgebungsbedingungen und/oder Einsatzzweck auf die Kupplungseinrichtung und/oder die Strömungseinrichtung einwirkt.

Das Wärmeträgermedium ist bei einer bevorzugten Ausführungsform eine Flüssigkeit, insbesondere Wasser. Das Wärmeträgermedium kann auch als Arbeitsfluid bezeichnet werden.

Bei der erfindungsgemäßen Wärmegewinnungsvorrichtung besteht vorteilhafterweise die Möglichkeit, dass die Wärmepumpeneinrichtung über die Kupplungseinrichtung und die Verzögerungseinrichtung und/oder die Strömungseinrichtung selektiv koppelbar sind. Beispielsweise kann die Wärmegewinnungsvorrichtung eine mit der Steuereinrichtung gekoppelte Sensoreinrichtung umfassen. Abhängig von einem Signal der Sensoreinrichtung kann die Steuereinrichtung die Kupplungseinrichtung beaufschlagen, um die Wärmepumpeneinrichtung wahlweise zuzuschalten oder abzuschalten. Entsprechendes gilt für die Verzögerungseinrichtung. Alternativ oder ergänzend kann die Steuereinrichtung die Strömungseinrichtung so schalten, dass wahlweise die Verzögerungseinrichtung und/oder die Wärmepumpeneinrichtung mit dem Wärmeträgermedium beaufschlagt wird.

Die Wärmegewinnungsvorrichtung kann windbetrieben sein, wobei es sich bei dem Umgebungsmedium um Luft handelt. Denkbar ist der Einsatz an oder in einem Windrad, unter Nutzung von Landwind oder Seewind. Denkbar ist der Einsatz in einer Aufwindanlage.

Die Wärmegewinnungsvorrichtung kann alternativ unter Nutzung eines flüssigen Umgebungsmediums eingesetzt werden. Denkbar ist der Einsatz als oder in einem Gezeitenkraftwerk. Alternativ ist zum Beispiel ein Einsatz an Hanglagen denkbar, in Kombination mit einem Pumpspeicherkraftwerk oder in alpinem Gelände zur Ausnutzung potenzieller Energie von zu Tal strömendem Schmelzwasser.

Wie bereits erwähnt besteht vorteilhafterweise eine mechanische Kopplung zwischen dem Antriebskörper und der Verzögerungseinrichtung und/oder der Wärmepumpeneinrichtung.

Die Kopplung zwischen dem Antriebskörper und der Verzögerungseinrichtung und/oder die Kopplung zwischen dem Antriebskörper und/oder der Wärmepumpeneinrichtung kann unterschiedlich zu einer mechanischen Kopplung sein. Beispielsweise ist eine elektrische Kopplung vorgesehen. Denkbar ist insbesondere auch, dass eine Antriebsleistung des Antriebskörpers gewandelt wird. Beispielsweise wird mechanische Rotationsenergie des Antriebskörpers generatorisch in elektrische Energie gewandelt, die wiederum elektromotorisch in mechanische Energie gewandelt werden kann, um die Wärmepumpeneinrichtung und/oder die Verzögerungseinrichtung anzutreiben.

Insbesondere kann vorgesehen sein, dass die Wärmepumpeneinrichtung und die Verzögerungseinrichtung auf unterschiedliche Weise mit dem Antriebskörper gekoppelt sind, um von diesem angetrieben zu werden, beispielsweise einerseits mechanisch und andererseits elektrisch.

Es versteht sich, dass eine direkte oder indirekte jeweilige Kopplung der Wärmepumpeneinrichtung und/oder der Verzögerungseinrichtung mit dem Antriebskörper vorgesehen sein kann.

Bei einer bevorzugten Ausführungsform kann vorgesehen sein, dass der Antriebskörper mindestens einen Generator aufweist, um mechanische Antriebsleistung in elektrische Antriebsleistung zu wandeln. Es kann mindestens ein Elektromotor vorgesehen sein, um die elektrische Antriebsleistung zu wandeln und die Wärmepumpeneinrichtung und/oder die Verzögerungseinrichtung zu betreiben.

Vorgesehen sein kann, dass die Komponenten der Wärmegewinnungsvorrichtung räumlich voneinander positioniert sind. Insbesondere kann bei dem zuletzt erwähnten vorteilhaften Ausführungsbeispiel vorgesehen sein, dass eine Windkraftanlage den Generator auf einem Schaft oder Turm in einem Gehäuse positioniert aufweist, wohingegen der mindestens eine Elektromotor am Boden im Abstand zur Windkraftanlage positioniert ist. Die elektrischen Komponenten am Boden können zum Beispiel ein lokales Netz bilden, wobei eine Kopplung zu einem Verbundnetz vorgesehen sein kann. Dadurch besteht die Möglichkeit, bei niedrigen Strompreisen und/oder bei Flaute, d. h. geringer relativer Geschwindigkeit des Umgebungsmediums und des Antriebskörpers, Wärme aus elektrischem Strom zu gewinnen.

Von Vorteil ist es, wenn über die Kupplungseinrichtung ein Verhältnis der Antriebsleistung für die Wärmepumpeneinrichtung und der Verzögerungseinrichtung einstellbar und insbesondere steuerbar und/oder regelbar ist. Dadurch weist die Wärmegewinnungsvorrichtung eine höhere Vielseitigkeit auf. Es besteht nicht nur die Möglichkeit, die Verzögerungseinrichtung und die Wärmegewinnungseinrichtung gewissermaßen "binär" zuzuschalten oder abzuschalten, sondern bei der vorliegenden Ausführungsform kann vorgegeben werden, mit welchem Verhältnis der Antriebsleistung die Wärmepumpeneinrichtung und die Verzögerungseinrichtung betrieben werden. Beispielsweise kann die Wärmepumpeneinrichtung bei niedriger Strömungsgeschwindigkeit des Umgebungsmediums zum Antriebskörper nicht betrieben werden und erst oberhalb eines Schwellenwertes der Strömungsgeschwindigkeit im Hinblick auf eine möglichst hohe Wärmeleistung zugeschaltet werden.

Günstig ist es, wenn der Betrieb der Wärmegewinnungsvorrichtung abhängig von einer Antriebsleistung des Antriebskörpers steuerbar und/oder regelbar ist.

Alternativ oder ergänzend ist es günstig, wenn der Betrieb der Wärmegewinnungsvorrichtung abhängig von einer Temperatur des Umgebungsmediums und/oder einer Relativgeschwindigkeit zum Umgebungsmedium steuerbar und/oder regelbar ist. Beispielsweise hängt der Wirkungsgrad der Wärmepumpeneinrichtung von der Temperatur des Umgebungsmediums ab. Es kann vorzugsweise sichergestellt werden, dass die Wärmepumpeneinrichtung mit einer möglichst hohen Leistungszahl betrieben wird. Zu diesem Zweck kann zum Beispiel wie nachfolgend erläutert eine Konditionierung und insbesondere Erwärmung des Umgebungsmediums vorgenommen werden. Alternativ oder ergänzend kann die Steuerung und/oder Regelung zum Beispiel von der Strömungsgeschwindigkeit des Umgebungsmediums abhängig gemacht werden.

Günstig ist es, wenn der Betrieb der Wärmegewinnungsvorrichtung im Hinblick auf eine möglichst hohe Temperatur oder eine vorgebbare oder möglichst hohe Temperatursteigerung des Wärmeträgermediums nach Durchgang durch die Verzögerungseinrichtung und/oder durch die Wärmepumpeneinrichtung steuerbar und/oder regelbar ist. Je nach Einsatz kann gewünscht sein, dass das Wärmeträgermedium so stark wie möglich erwärmt wird oder eine möglichst hohe Endtemperatur aufweist. Durch entsprechende Ansteuerung der Kupplungseinrichtung und der Strömungseinrichtung kann die Steuereinrichtung für einen derartigen Betriebszustand sorgen.

Günstig kann es sein, wenn der Betrieb der Wärmegewinnungsvorrichtung im Hinblick auf eine vorgebbare oder möglichst hohe Wärmemengengewinnung durch das Wärmeträgermedium nach Durchgang durch die Verzögerungseinrichtung und/oder durch die Wärmepumpeneinrichtung steuerbar und/oder regelbar ist. Es kann ein Einsatz vorgesehen sein, bei dem gewünscht ist, die Wärmeleistung (Wärmemenge pro Zeiteinheit) zu maximieren oder eine vorgebbare Wärmeleistung zu erzielen. Dieser Betriebszustand kann von der Steuereinrichtung unter Ansteuerung der Kupplungseinrichtung und der Strömungseinrichtung vorzugsweise ebenfalls bereitgestellt werden.

Ein möglichst hohes Temperaturniveau ist beispielsweise zum Beladen thermischer Speicher von Vorteil.

Günstig ist es, wenn die Strömungseinrichtung eine Fördereinrichtung umfasst und wenn ein Massen- oder Volumenstrom des Wärmeträgermediums einstellbar ist, insbesondere steuerbar und/oder regelbar ist. Die Einstellung des Massen- oder Volumenstroms bietet einen Freiheitsgrad beim Betrieb der Wärmegewinnungsvorrichtung. Beispielsweise kann bei eher geringem Massen- oder Volumenstrom eine hohe Temperatursteigerung des Wärmeträgermediums erzielt werden, bei bestimmter Wärmeleistung. Durch die Steigerung des Massen- oder Volumenstroms fällt die Temperatursteigerung beispielsweise geringer aus, es kann zum Beispiel jedoch eine größere Wärmeleistung erzielt werden.

Die Fördereinrichtung, insbesondere ein Pumpaggregat, ist günstigerweise mit dem Antriebskörper gekoppelt oder koppelbar und von diesem antreibbar. Beispielsweise kann ein Teil der Antriebsleistung der Fördereinrichtung direkt oder indirekt über eine Getriebeeinrichtung zugeführt werden.

Es versteht sich, dass die Strömungseinrichtung mindestens eine Fluidleitung umfasst, durch die hindurch das Wärmeträgermedium strömen kann. Die vorstehend genannte Fördereinrichtung ist günstigerweise in mindestens eine Fluidleitung geschaltet. Die Fördereinrichtung kann das Wärmeträgermedium zum Beispiel in einem Kreislauf fördern. Denkbar ist, dass die Fördereinrichtung das Wärmeträgermedium aus einem Reservoir fördert, das Bestandteil des Kreislaufs sein kann.

Vorzugsweise umfasst die Strömungseinrichtung eine Ventileinrichtung mit mindestens einem von der Steuereinrichtung betätigbaren Ventil, mit dem eine Fluidverbindung zur Verzögerungseinrichtung und/oder zur Wärmepumpeneinrichtung wahlweise freigebbar oder sperrbar ist. Das mindestens eine Ventil ist insbesondere in die mindestens eine vorstehend genannte Fluidleitung geschaltet, um diese wahlweise freizugeben oder zu sperren. Denkbar kann insbesondere sein, dass an dem mindestens einen Ventil der Massen- oder Volumenstrom des Wärmeträgermediums aufgeteilt werden kann, wodurch bevorzugt die Verzögerungseinrichtung und die Wärmepumpeneinrichtung selektiv mit dem Wärmeträgermedium beaufschlagt werden können. Günstigerweise kann wie vorstehend erläutert das Verhältnis der diesbezüglichen Massen- oder Volumenströme einstellbar und insbesondere steuerbar und/oder regelbar sein. Durch die Ventileinrichtung mit dem mindestens einen Ventil bietet die Wärmegewinnungsvorrichtung einen zusätzlichen Freiheitsgrad im Hinblick auf einen für den Einsatz optimalen Betriebspunkt. Je nach Bedarf kann die thermische Kopplung der Verzögerungseinrichtung und der Wärmepumpeneinrichtung mit dem Wärmeträgermedium beeinflusst werden.

Vorzugsweise ist das mindestens eine Ventil derart betätigbar, dass die Verzögerungseinrichtung und die Wärmepumpeneinrichtung seriell mit dem Wärmeträgermedium beaufschlagbar sind. Dabei ist beispielsweise vorgesehen, dass eine jeweilige Warmseite der Verzögerungseinrichtung und der Wärmepumpeneinrichtung in eine Fluidleitung geschaltet oder an diese angeschlossen sind. Das Wärmeträgermedium strömt vorteilhafterweise zunächst durch die Verzögerungseinrichtung und anschließend durch die Wärmepumpeneinrichtung.

Vorgesehen sein kann, dass eine serielle Beaufschlagung auch ohne Vorhandensein des mindestens einen Ventils möglich ist.

Bevorzugt ist das mindestens eine Ventil derart betätigbar, dass die Verzögerungseinrichtung und die Wärmepumpeneinrichtung parallel mit dem Wärmeträgermedium beaufschlagbar sind. Beispielsweise ist eine verzweigende Fluidleitung vorgesehen, wobei die Verzögerungseinrichtung in eine Verzweigung und die Wärmepumpeneinrichtung in die andere Verzweigung geschaltet ist. Alternativ sind zwei am Ventil angeschlossene Fluidleitungen mit der Verzögerungseinrichtung und der Wärmepumpeneinrichtung vorhanden. Durch den parallelen Betrieb kann ein jeweiliger Anteil des Gesamtstroms des Wärmeträgermediums durch die Verzögerungseinrichtung einerseits und die Wärmepumpeneinrichtung andererseits strömen. Günstigerweise kann das Verhältnis der Teilströme eingestellt werden.

Es kann vorgesehen sein, dass eine parallele Beaufschlagung der Verzögerungseinrichtung und der Wärmepumpeneinrichtung auch ohne Vorhandensein des mindestens einen Ventils möglich ist.

Bei einer seriellen Beaufschlagung der Verzögerungseinrichtung und der Wärmepumpeneinrichtung ist günstigerweise vorgesehen, dass das Wärmeträgermedium (nur) einem Reservoir oder Verbraucher zugeführt wird. Bei einer parallelen Beaufschlagung sind beispielsweise zwei Reservoirs oder Verbraucher vorgesehen, wobei das Reservoir des die Verzögerungseinrichtung durchströmenden Wärmeträgermediums typischerweise auf einem niedrigeren Temperaturniveau liegt als das die Wärmepumpeneinrichtung durchströmende Wärmeträgermedium.

Das Umgebungsmedium dient insbesondere als Reservoir für eine Kaltseite der Wärmepumpeneinrichtung. Ein in einem Kreislauf der Wärmepumpeneinrichtung geführtes Arbeitsfluid kann unter Aufnahme von Wärme des Umgebungsmediums an einem Verdampfer verdampfen.

Im Hinblick auf eine möglichst hohe Leistungszahl ist es von Vorteil, wenn das Umgebungsmedium temperiert werden kann. Die Leistungszahl der Wärmepumpeneinrichtung kann von der Temperatur des Umgebungsmediums abhängen, so dass bei niedriger Umgebungstemperatur (beispielsweise der Umgebungsluft im Winter) von der Wärmepumpeneinrichtung nur eine geringere Wärmeleistung bereitgestellt werden kann als im Sommer.

Vorzugsweise umfasst die Wärmegewinnungsvorrichtung eine Heizeinrichtung für das der Wärmepumpeneinrichtung zugeführte Umgebungsmedium. Dies bietet zum Beispiel die Möglichkeit, die Leistungszahl der Wärmepumpeneinrichtung zu steigern.

Von Vorteil ist es, wenn die Heizeinrichtung baulich mit einer Verdampferseite der Wärmepumpeneinrichtung integriert ist. Auf diese Weise kann eine kompakte Bauform erzielt werden.

Von Vorteil ist es, wenn Einstellelemente vorgesehen sind, über die ein Massen- oder Volumenstrom des Umgebungsmediums an der Heizeinrichtung einstellbar ist. Die Einstellelemente sind, zum Beispiel mittels einer diesbezüglichen Antriebs- oder Einstelleinrichtung, vorteilhafterweise von der Steuereinrichtung ansteuerbar.

Von Vorteil ist es, wenn die Strömungseinrichtung die Heizeinrichtung mit einer Ausgangsseite der Verzögerungseinrichtung und/oder mit einer Ausgangsseite der Wärmepumpeneinrichtung koppelt zur thermischen Kopplung des Umgebungsmediums und des Wärmeträgermediums. Dies gibt beispielsweise die Möglichkeit, das erwärmte Wärmeträgermedium der Heizeinrichtung zuzuführen, an der Wärme an das Umgebungsmedium abgegeben werden kann.

Bevorzugt umfasst die Ventileinrichtung ein Ventil, über das eine Strömungsverbindung von der Verzögerungseinrichtung und/oder der Wärmepumpeneinrichtung zur Heizeinrichtung selektiv freigebbar und sperrbar ist. Je nach Bedarf kann das Wärmeträgermedium über eine Fluidleitung, in die das Ventil geschaltet ist, der Heizeinrichtung zugeführt werden.

Vorgesehen sein kann, dass die Strömungseinrichtung eine Ausgangsseite der Heizeinrichtung mit der Wärmepumpeneinrichtung koppelt zur thermischen Kopplung der Wärmepumpeneinrichtung und des Wärmeträgermediums. Beispielsweise ist eine Fluidleitung vorgesehen, über die das abgekühlte Wärmeträgermedium von einer Ausgangsseite der Heizeinrichtung zu einer Eingangsseite (Warmseite) der Wärmepumpeneinrichtung strömen kann.

Vorteilhafterweise umfasst die Ventileinrichtung im letztgenannten Fall ein Ventil, über das eine Strömungsverbindung von der Heizeinrichtung zur Wärmepumpeneinrichtung selektiv freigebbar und sperrbar ist.

Vorgesehen sein kann, dass das in der Heizeinrichtung abgekühlte Wärmeträgermedium einem Reservoir zugeführt wird, das beispielsweise Bestandteil des Kreislaufs für das Wärmeträgermedium sein kann.

Vorteilhafterweise umfasst die Wärmegewinnungsvorrichtung eine mit dem erwärmten Wärmeträgermedium beaufschlagbare Wärmespeichereinrichtung. In der Wärmespeichereinrichtung kann Wärme für späteren Einsatz zwischengespeichert werden.

Bei der Wärmegewinnungsvorrichtung kann ein Betriebsmodus vorgesehen sein, bei dem die Wärmepumpeneinrichtung vom Antriebskörper entkoppelt ist. Lediglich die Verzögerungseinrichtung wird vom Antriebskörper angetrieben. Es ist vorzugsweise vorgesehen, dass über das Wärmeträgermedium lediglich die Verzögerungseinrichtung beaufschlagt wird.

Bei der Wärmegewinnungsvorrichtung kann vorteilhafterweise ein Betriebsmodus vorgesehen sein, bei dem die Verzögerungseinrichtung vom Antriebskörper entkoppelt ist. Dabei wird lediglich die Wärmepumpeneinrichtung von dem Antriebskörper mit einer Antriebsleistung beaufschlagt. Vorgesehen sein kann, dass lediglich die Wärmepumpeneinrichtung mit dem Wärmeträgermedium beaufschlagt ist. Alternativ kann eine serielle Beaufschlagung der Verzögerungseinrichtung und der Wärmepumpeneinrichtung vorgesehen sein, im Hinblick auf eine zeitweilige Zuschaltung der Verzögerungseinrichtung.

Bei der Wärmegewinnungsvorrichtung können jeweilige Betriebsmodi vorgesehen sein, bei dem die Wärmepumpeneinrichtung und die Verzögerungseinrichtung mit dem Antriebskörper gekoppelt sind. Vorgesehen sein kann einerseits, dass das Wärmeträgermedium die Verzögerungseinrichtung und die Wärmepumpeneinrichtung seriell beaufschlagt und diese nacheinander durchströmt. Alternativ kann andererseits vorgesehen sein, dass das Wärmeträgermedium die Verzögerungseinrichtung und die Wärmepumpeneinrichtung parallel beaufschlagt, d. h. es können zwei Teilströme des Wärmeträgermediums vorgesehen sein, die durch die Verzögerungseinrichtung einerseits und die Wärmepumpeneinrichtung andererseits geführt sind.

Bei der Wärmegewinnungsvorrichtung kann ein Betriebsmodus vorgesehen sein, beim dem das Umgebungsmedium mittels der Heizeinrichtung über das Wärmeträgermedium erwärmt wird. Ein derartiger Betriebsmodus ist insbesondere bei serieller Beaufschlagung oder alternativ bei paralleler Beaufschlagung der Verzögerungseinrichtung und der Wärmepumpeneinrichtung mittels des Wärmeträgermediums denkbar.

Wie bereits erwähnt betrifft die vorliegende Erfindung auch ein Verfahren.

Ein erfindungsgemäßes, die eingangs genannte Aufgabe lösendes Verfahren dient zum Betreiben einer Wärmegewinnungsvorrichtung, bei der ein Antriebskörper infolge einer Relativbewegung zu einem Umgebungsmedium angetrieben und mit einer Verzögerungseinrichtung sowie über eine Kopplungseinrichtung mit einer Wärmepumpeneinrichtung gekoppelt ist, wobei die Verzögerungseinrichtung und die Wärmepumpeneinrichtung mittels eines Wärmeträgermediums beaufschlagbar sind, wobei das Wärmeträgermedium mittels einer Strömungseinrichtung geführt wird, und wobei über eine mit der Kupplungseinrichtung und der Strömungseinrichtung in Wirkverbindung stehende Steuereinrichtung der Betrieb der Wärmegewinnungsvorrichtung gesteuert und/oder geregelt wird.

Die Vorteile, die bereits im Zusammenhang mit der Erläuterung der erfindungsgemäßen Wärmegewinnungsvorrichtung erwähnt wurden, können durch Ausüben des Verfahrens ebenfalls erzielt werden. Diesbezüglich kann auf die voranstehenden Ausführungen verwiesen werden.

Vorteilhafte Ausführungsbeispiele des erfindungsgemäßen Verfahrens ergeben sich durch vorteilhafte Ausführungsformen der erfindungsgemäßen Vorrichtung. Diesbezüglich kann zur Vermeidung von Wiederholungen auf die voranstehenden Ausführungen verwiesen werden.

Die nachfolgende Beschreibung bevorzugter Ausführungsformen der Erfindung dient im Zusammenhang mit der Zeichnung der näheren Erläuterung der Erfindung. Unter Einsatz dieser Ausführungsformen können vorteilhafte Ausführungsbeispiele des erfindungsgemäßen Verfahrens ausgeübt werden. Es zeigen:
- Figur 1:: eine schematische Darstellung eines windthermischen Energiesystems umfassend eine bevorzugte Ausführungsform einer erfindungsgemäßen Wärmegewinnungsvorrichtung;
- Figur 2:: eine schematische Darstellung der Wärmegewinnungsvorrichtung in einem ersten Betriebszustand;
- Figuren 3 bis 7:: weitere schematische Darstellungen der Wärmegewinnungsvorrichtungen in einem zweiten, dritten, vierten, fünften bzw. sechsten Betriebszustand;
- Figur 8:: eine schematische Darstellung einer Heizeinrichtung für ein Umgebungsmedium an einem Verdampfer der Wärmegewinnungsvorrichtung; und
- Figur 9:: eine beispielhafte konstruktive Umsetzung eines Details der Heizvorrichtung aus Figur 8.

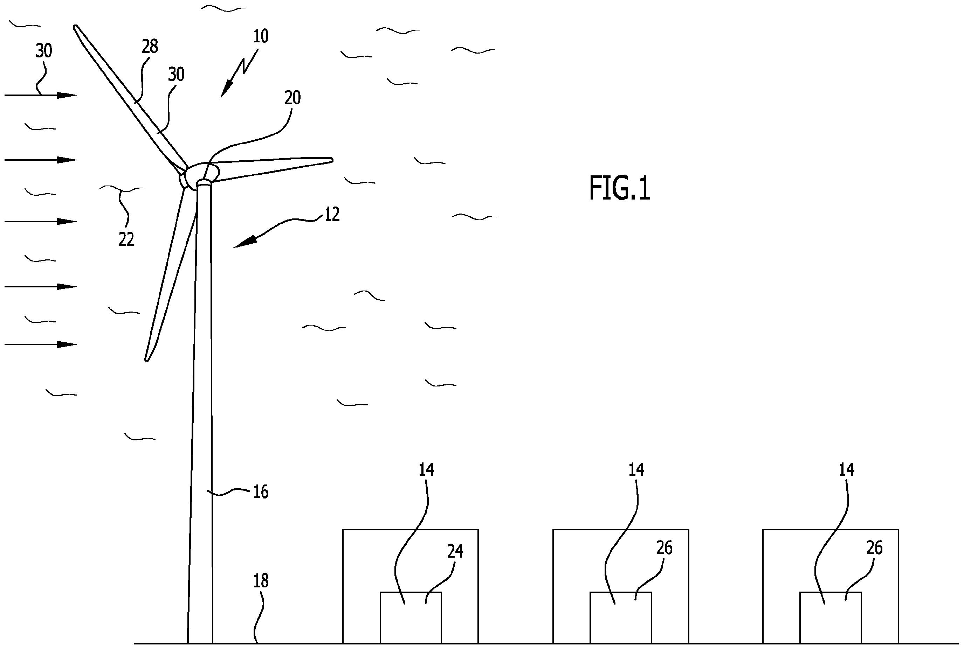

Figur 1 zeigt in einer schematischen Darstellung eine insgesamt mit dem Bezugszeichen 10 belegte vorteilhafte Ausführungsform einer erfindungsgemäßen Wärmegewinnungsvorrichtung, die nachfolgend vereinfachend als Vorrichtung 10 bezeichnet wird. Die Vorrichtung 10 ist Bestandteil eines windthermischen Energiesystems 12, das beispielhaft zur Versorgung von mindestens einem Verbraucher 14 mit thermischer Energie eingesetzt wird. Vorliegend sind beispielhaft drei Verbraucher 14 dargestellt, die mit der Vorrichtung 10 thermisch gekoppelt sind.

Das Energiesystem 12 umfasst vorliegend einen Schaft 16 mit einem am Boden 18 festgelegten festen Ende und einem freien Ende, das die Vorrichtung 10 aufnimmt. Zu diesem Zweck kann das Energiesystem 12 ein Gehäuse 20 aufweisen, in dem bei einer bevorzugten Ausführungsform die Mehrzahl der Komponenten der Vorrichtung 10 aufgenommen sind. Das Energiesystem ist wie erwähnt windgetrieben, beispielsweise durch Landwind oder Seewind. Ein relativ zum stationären Energiesystem 12 bewegtes Umgebungsmedium 22 ist dementsprechend Luft. Je nach den äußeren Bedingungen kann die Temperatur des Umgebungsmediums 22 hoch sein, zum Beispiel im Sommer, oder niedrig, insbesondere im Winter.

Andere vorteilhafte Anwendungen der erfindungsgemäßen Wärmegewinnungsvorrichtung liegen beispielsweise in der Nutzung bei Aufwindkraftwerken oder zusammen mit Wasser als Umgebungsmedium. Diesbezüglich wäre zum Beispiel der Einsatz in Gezeitenkraftwerken oder zusammen mit Schmelzwasser im alpinen Raum zu nennen. Denkbar ist auch ein Einsatz im Zusammenhang mit Pumpspeicherkraftwerken.

Die Vorrichtung 10 ist mit einem jeweiligen Verbraucher 14 thermisch gekoppelt. Mittels der Vorrichtung 10 gewonnene Wärme kann den Verbrauchern 14 zugeführt und dort eingesetzt werden. Bei einem Verbraucher 14 kann es sich insbesondere um eine Wärmespeichereinrichtung 24 handeln, beispielsweise ausgestaltet als oder umfassend einen Feststoffspeicher. Andersartige Verbraucher 14 sind zum Beispiel Heizanlagen 26.

Die Vorrichtung 10 eignet sich somit insbesondere für einen Einsatz bei der dezentralen Wärmegewinnung.

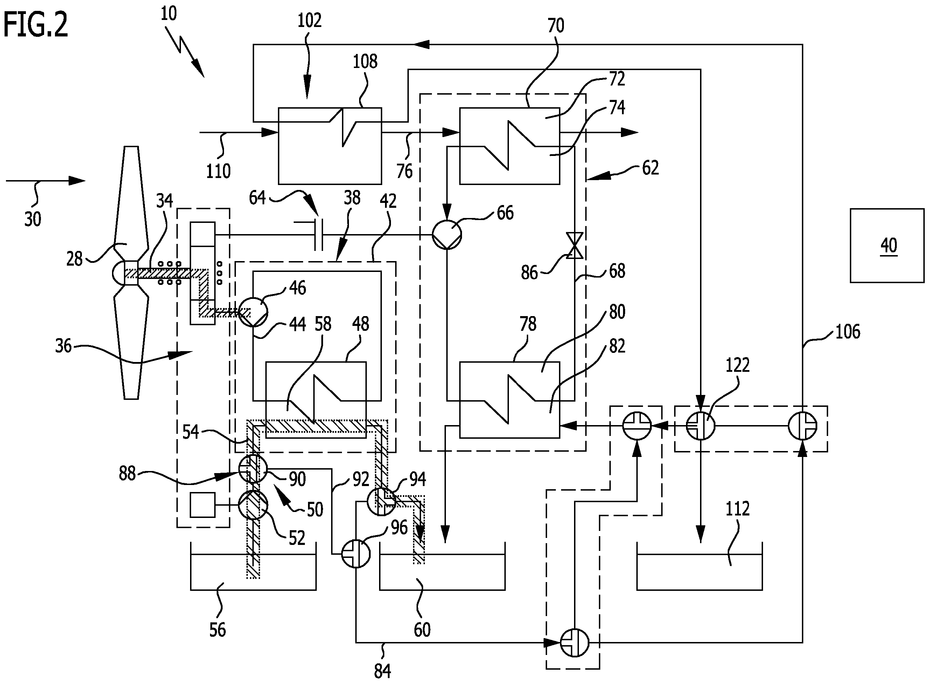

Nachfolgend wird unter Verweis zunächst auf Figur 2 auf den Aufbau der Vorrichtung 10 eingegangen. Anschließend erfolgt die Erläuterung vorteilhafter Betriebszustände der Vorrichtung 10 unter Verweis auf die Figuren 2 bis 7. Die Betriebszustände werden beispielsweise abhängig von den jeweiligen Umgebungsbedingungen eingenommen, zum Beispiel der Temperatur und/oder der Strömungsgeschwindigkeit des Umgebungsmediums 22, und/oder abhängig vom Einsatz mit einem bestimmten Verbraucher 14.

Die Vorrichtung 10 umfasst einen Antriebskörper 28, der vom Umgebungsmedium 22 umströmt wird (Pfeil 30). Durch die Strömung des Umgebungsmediums 22 wird der Antriebskörper 28 in Rotation versetzt. Der Antriebskörper 28 umfasst einen Rotor 32 und eine mit diesem drehfest gekoppelte Antriebswelle 34.

Die Antriebswelle 34 steht mit einer Getriebeeinrichtung 36 in Wirkverbindung. Über die Getriebeeinrichtung 36 kann eine Antriebskraft oder Antriebsleistung des Antriebskörpers 28 wie nachfolgend erläutert auf weitere Komponenten der Vorrichtung 10 übertragen werden.

Die Vorrichtung 10 umfasst eine Verzögerungseinrichtung 38, die über die Getriebeeinrichtung 36, im vorliegenden Fall mechanisch, mit dem Antriebskörper 28 gekoppelt ist. Die Kopplung ist selektiv und kann bei Bedarf aufgehoben werden.

Die Vorrichtung 10 umfasst eine Steuereinrichtung 40, die den Betrieb der Vorrichtung 10 steuert und/oder regelt.

Beispielsweise kann unter Ansteuerung der Steuereinrichtung 40 eine bestehende Kopplung zwischen dem Antriebskörper 28 und der Verzögerungseinrichtung 38 aufgehoben werden oder die Kopplung in Gang gesetzt werden, um die Verzögerungseinrichtung 38 mit dem Antriebskörper 28 zu betreiben.

Die Verzögerungseinrichtung 38 ist vorliegend als Retarder 42 ausgestaltet. Der Retarder 42 umfasst einen Kreislauf 44 für ein darin geführtes Arbeitsfluid, das beispielsweise Antriebsleistung des Antriebskörpers 28 durch Fluidreibung aufnehmen kann. Eine Strömung im Kreislauf 44 wird mittels eines Pumpaggregates 46, das mit dem Antriebskörper 28 koppelbar ist, angetrieben.

Durch die Fluidreibung wird die Temperatur des Arbeitsfluids gesteigert. Um das Arbeitsfluid zu kühlen, weist der Retarder 42 einen Wärmetauscher 48 auf.

Die Vorrichtung 10 umfasst eine mit der Steuereinrichtung 40 gekoppelte Strömungseinrichtung 50. In der Strömungseinrichtung 50 ist ein Wärmeträgermedium, vorliegend insbesondere Wasser, zum Retarder 42 führbar. Die Strömungseinrichtung 50 steht über das Wärmeträgermedium mit dem Retarder 42 in thermischem Kontakt.

Insbesondere kann die Strömungseinrichtung 50 eine Fördereinrichtung in Gestalt eines Pumpaggregates 52 umfassen und eine Fluidleitung 54 umfassen oder ausbilden. Das Pumpaggregat 52 ist über die Getriebeeinrichtung 36 mit dem Antriebskörper 28 gekoppelt und dadurch von diesem antreibbar.

Darüber hinaus steht das Pumpaggregat 52 mit der Steuereinrichtung 40 in Wirkverbindung. Dies gibt die Möglichkeit, einen Massen- oder Volumenstrom des Wärmeträgermediums einzustellen, insbesondere zu steuern und/oder zu regeln.

Aufstromseitig weist die Strömungseinrichtung 50 ein Reservoir 56 für üblicherweise auf verhältnismäßig geringer Temperatur liegendes Wärmeübertragungsmedium auf. Mittels des Pumpaggregates 52 kann das Wärmeträgermedium aus dem Reservoir 56 durch die Fluidleitung 54 gefördert werden.

Die Fluidleitung 54 ist am Wärmetauscher 48 mit der Warmseite 58 des Retarders 42 gekoppelt. Das durch den Wärmetauscher 48 strömende Wärmeträgermedium nimmt Wärme vom Arbeitsfluid des Retarders 42 auf und wird dadurch erwärmt. Das erwärmte Wärmeträgermedium kann weiter durch die Fluidleitung 54 strömen und beispielsweise einem Reservoir 60 zugeführt werden, das zum Beispiel mit einem der Verbraucher 14 thermisch gekoppelt ist oder einer der Verbraucher 14 ist.

Die Verzögerungseinrichtung 38 dient insbesondere zur Steigerung der Betriebssicherheit der Vorrichtung 10. Es ist vorteilhafterweise die Möglichkeit gegeben, eine Drehzahl des Antriebskörpers 28 zu steuern und/oder zu regeln. Bei steigender Windgeschwindigkeit kann ein Teil der Antriebsleistung auf die Verzögerungseinrichtung 38 übertragen und dadurch der Antriebskörper 28 abgebremst werden. Über das Wärmeträgermedium kann zugleich thermische Energie bereitgestellt werden.

In den Antriebssträngen für die Pumpaggregate 46 und 52 können beispielsweise hydrodynamische Wandler zum Einsatz kommen, um abhängig vom Arbeitspunkt optimale Drehzahl- oder Drehmomentkombinationen für den Retarder 42 und die Strömungseinrichtung 50 bereitzustellen.

Zur Steigerung der Vielseitigkeit weist die Vorrichtung 10 ferner eine Wärmepumpeneinrichtung 62 auf.

Die Wärmepumpeneinrichtung 62 ist über eine Kupplungseinrichtung 64, die ihrerseits mit der Getriebeeinrichtung 36 in Wirkverbindung steht, im vorliegenden Fall mechanisch mit dem Antriebskörper 28 gekoppelt.

Wie bereits vorstehend erwähnt besteht die Möglichkeit, die Verzögerungseinrichtung 38 und/oder die Wärmepumpeneinrichtung 62 abweichend von der hier beschriebenen beispielhaften mechanischen Kopplung auf andersartige Weise mit dem Antriebskörper 28 zu koppeln. Denkbar ist beispielsweise eine elektrische Kopplung. Auch eine hydraulische oder pneumatische Kopplung ist denkbar.

Vorgesehen sein kann bei einer bevorzugten Ausführungsform, dass eine mechanische Antriebsleistung des Antriebskörpers 28 mittels eines Generators, zum Beispiel im Gehäuse 20, in elektrische Antriebsleistung gewandelt wird. Die elektrische Antriebsleistung kann beispielsweise Elektromotoren am Boden 18 zugeführt werden, wobei die Verzögerungseinrichtung 38 und die Wärmepumpeneinrichtung 62 am Boden 18 positioniert sind. Mittels Elektromotoren kann die elektrische Antriebsleistung in eine mechanische Antriebsleistung für die Verzögerungseinrichtung 38 und die Wärmepumpeneinrichtung 62 gewandelt werden.

Vorgesehen sein kann, dass die Elektromotoren in ein lokales elektrisches Netz eingebunden sind, das mit einem Verbundnetz gekoppelt sein kann, wodurch zum Beispiel bei niedrigen Strompreisen und/oder unzureichender Relativgeschwindigkeit des Umgebungsmediums 22 zum Antriebskörper 28 Wärme aus elektrischem Strom des Verbundnetzes gewonnen werden kann.

Die Kupplungseinrichtung 64 ist mit der Steuereinrichtung 40 gekoppelt und kann von dieser gesteuert und/oder geregelt werden. Dies gibt die Möglichkeit, die Wärmepumpeneinrichtung 62 selektiv zuzuschalten oder abzuschalten. Bei in Eingriff stehender Kupplungseinrichtung 64 kann ein Pumpaggregat 66 der Wärmepumpeneinrichtung 62 vom Antriebskörper 28 angetrieben werden. Ist die Kupplungseinrichtung 64 außer Eingriff, wird die Wärmepumpeneinrichtung 62 nicht vom Antriebskörper 28 mit einer Antriebsleistung beaufschlagt.

Vorzugsweise ist vorgesehen, dass ein Verhältnis der Antriebsleistung, mit der die Wärmepumpeneinrichtung 62 einerseits und die Verzögerungseinrichtung 38 andererseits angetrieben werden, einstellbar und insbesondere steuerbar und/oder regelbar ist. Dies gibt die Möglichkeit, den Betriebspunkt der Vorrichtung 10 besonders gut einzustellen.

Die Wärmepumpeneinrichtung 62 weist einen Kreislauf 68 auf, in dem mittels des Pumpaggregates 66 ein Arbeitsfluid umgewälzt wird. Im Kreislauf 68 ist ein Wärmetauscher 70 angeordnet, der als Verdampfer an einer Kaltseite 74 der Wärmepumpeneinrichtung 62 wirkt. An der Kaltseite 74 wird dem Umgebungsmedium 22 Wärme unter Verdampfung des Arbeitsfluids entzogen. Ein Pfeil 76 zeigt die Strömung des zuströmenden Umgebungsmediums 22, das den Verdampfer 72 anströmen kann.

Das Pumpaggregat 66 ist ein Kompressor, der in an sich bekannter Weise das Arbeitsfluid verdichtet und dabei erwärmt. Die Wärmepumpeneinrichtung 62 umfasst einen weiteren Wärmetauscher 78. Der Wärmetauscher 78 wirkt als Kondensator 80 an einer Warmseite 82 der Wärmepumpeneinrichtung 62.

Die Strömungseinrichtung 50 ist mit der Wärmepumpeneinrichtung 62 an der Warmseite 82 thermisch koppelbar. Die Strömungseinrichtung 50 umfasst eine an die Fluidleitung 54 strömungsabwärts des Retarders 42 angeschlossene Fluidleitung 84. Die Fluidleitung 84 durchströmt den Wärmetauscher 78.

Durch Kondensation kann das Arbeitsfluid der Wärmepumpeneinrichtung 62 Wärme an das Wärmeträgermedium abgeben. Dadurch wird das Wärmeträgermedium erhitzt. Ausgangsseitig der Wärmepumpeneinrichtung 62 kann das erwärmte Wärmeträgermedium einem Reservoir zugeführt werden, bei dem es sich zum Beispiel um das Reservoir 60 handeln kann.

Das Arbeitsfluid im Kreislauf 68 kondensiert und kann mittels eines Entspannungsventils 86 in an sich bekannter Weise entspannt werden.

Die Vorrichtung 10 umfasst eine Ventileinrichtung 88. Die Steuereinrichtung 40 ist mit der Ventileinrichtung 88 gekoppelt, um deren Betrieb einzustellen, insbesondere zu steuern und/oder zu regeln. Insbesondere können eine Mehrzahl von Ventilen der Ventileinrichtung 88 angesteuert werden.

Die Ventileinrichtung 88 umfasst ein Ventil 90, das dem Retarder 42 vorgelagert in die Fluidleitung 54 geschaltet ist. Vom Ventil 90 zweigt eine Fluidleitung 92 ab, die als Bypassleitung ausgestaltet ist und den Retarder 42 umgeht. Strömungsabwärts des Retarders 42 ist ein weiteres Ventil 94 in die Fluidleitung 54 geschaltet. Am Ventil 94 kann das den Retarder 42 durchströmende Wärmeträgermedium selektiv in die Fluidleitung 84 oder in das Reservoir 60 geleitet werden.

In die Fluidleitung 84 ist ein Ventil 96 geschaltet, in das die Fluidleitung 92 einzweigt.

Der Wärmetauscher 78 kann mit dem Wärmeträgermedium beaufschlagt werden, indem dieses zunächst durch den Wärmetauscher 48 des Retarders 42 strömt und anschließend durch die Fluidleitung 84, oder indem dieses den Retarder 42 über die Fluidleitung 92 passiert. In beiden Fällen kann das Wärmeträgermedium in den Wärmetauscher 78 strömen und Wärme vom Arbeitsfluid der Wärmepumpeneinrichtung 62 aufnehmen.

Zunächst wird auf vier verschiedene Betriebsmodi der Vorrichtung 10 eingegangen, wobei die Figuren 2 bis 5 unterschiedliche Betriebszustände darstellen.

Die Vorrichtung 10 weist insbesondere den Vorteil einer hohen Vielseitigkeit auf. Wünschenswert ist es, dass die Vorrichtung 10 je nach Einsatz mit unterschiedlichen Verbrauchern 14 und abhängig von Umgebungsbedingungen wie Temperatur des Umgebungsmediums 22 oder dessen Strömungsgeschwindigkeit so angepasst werden kann, dass ein optimaler Betriebspunkt erreicht werden kann.

Insbesondere besteht dabei die Möglichkeit, über die Steuereinrichtung 40 den Betrieb der Vorrichtung 10 zu steuern und/oder zu regeln, abhängig von einer Antriebsleistung des Antriebskörpers 28 und/oder abhängig von der Temperatur und/oder Strömungsgeschwindigkeit des Umgebungsmediums 22.

Gesteuert und/oder geregelt werden kann der Betrieb der Vorrichtung 10 insbesondere, um eine vorgebbare oder möglichst hohe Temperatur oder eine vorgebbare oder möglichst hohe Temperatursteigerung des Wärmeträgermediums nach dem Durchgang durch die Verzögerungseinrichtung 38 und/oder durch die Wärmepumpeneinrichtung 62 zu erzielen. Alternativ oder ergänzend ist es wünschenswert, den Betrieb der Vorrichtung 10 im Hinblick auf eine vorgebbare oder möglichst hohe Wärmeleistung durch das Wärmeträgermedium nach dem Durchgang durch die Verzögerungseinrichtung 38 und/oder durch die Wärmepumpeneinrichtung 62 zu erzielen.

Figur 2 zeigt einen Betriebsmodus der Vorrichtung 10, bei dem lediglich die Verzögerungseinrichtung 38 zum Einsatz kommt. Die Kupplungseinrichtung 64 ist außer Eingriff, und die Wärmepumpeneinrichtung 62 wird nicht mit Antriebsleistung beaufschlagt. Über die Strömungseinrichtung 50 ist die Verzögerungseinrichtung 38 mit dem Wärmeträgermedium gekoppelt. Das Wärmeträgermedium kann dabei den Wärmetauscher 48 durchströmen und dem Reservoir 60 zugeführt werden.

Ein derartiger Einsatz der Vorrichtung 10 bietet sich zum Beispiel an, wenn die Wärmeleistung gleich der Leistung der Antriebswelle 34 sein soll und besonders gute Regeleigenschaften für die Drehzahl des Antriebskörpers 28 erzielt werden sollen.

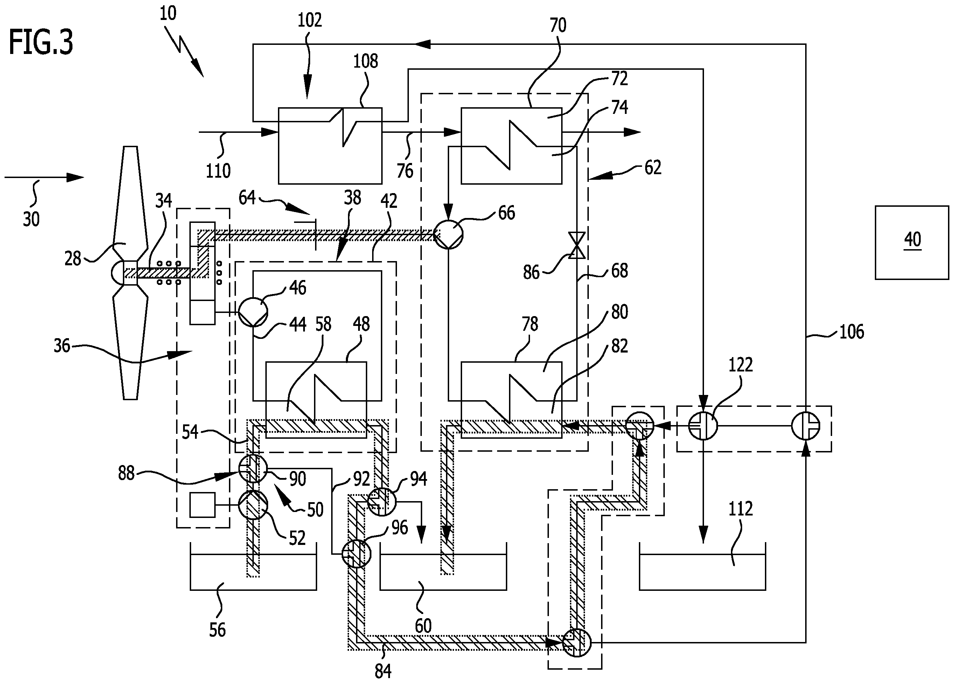

Figur 3 zeigt einen Betriebsmodus, bei dem die Kupplungseinrichtung 62, ebenso wie in den nachfolgend beschriebenen Szenarien, in Eingriff ist. Zumindest ein Teil der Antriebsleistung des Antriebskörpers 28 wird auf die Wärmepumpeneinrichtung 62 übertragen. Der in Figur 3 gezeigte Modus sieht vor, dass sogar die gesamte Antriebsleistung auf die Wärmepumpeneinrichtung 62 übertragen wird und die Verzögerungseinrichtung 38 nicht mit Antriebsleistung beaufschlagt ist.

Die Strömungseinrichtung 50 ist so geschaltet, dass das Wärmeträgermedium durch die Wärmetauscher 48 und 78 hindurchströmt und thermisch mit den Warmseiten 58 und 82 gekoppelt ist. Das Wärmeträgermedium wird erwärmt und beispielsweise dem Reservoir 60 zugeführt. Alternativ kann vorgesehen sein, dass der Retarder 42 über die Fluidleitung 92 umgangen wird. Zu diesem Zweck können die Ventile 90 und 96 in geeigneter Weise geschaltet sein.

Bei dem in Figur 3 dargestellten Betriebsmodus zeigt sich, dass eine hohe Temperatursteigerung bei maximaler Wärmemengengewinnung erzielt werden kann. Die Wärmeleistung entspricht der Leistung der Antriebswelle 34 vergrößert um den Faktor der Leistungszahl der Wärmepumpeneinrichtung 62. Die Temperatursteigerung kann insbesondere durch den Massen- oder Volumenstrom des Wärmeträgermediums eingestellt werden.

Der Betriebsmodus gemäß Figur 3 eignet sich insbesondere für einen Sommerbetrieb bei einer verhältnismäßig hohen Umgebungstemperatur, die zu einer hohen Leistungszahl der Wärmepumpeneinrichtung 62 führt.

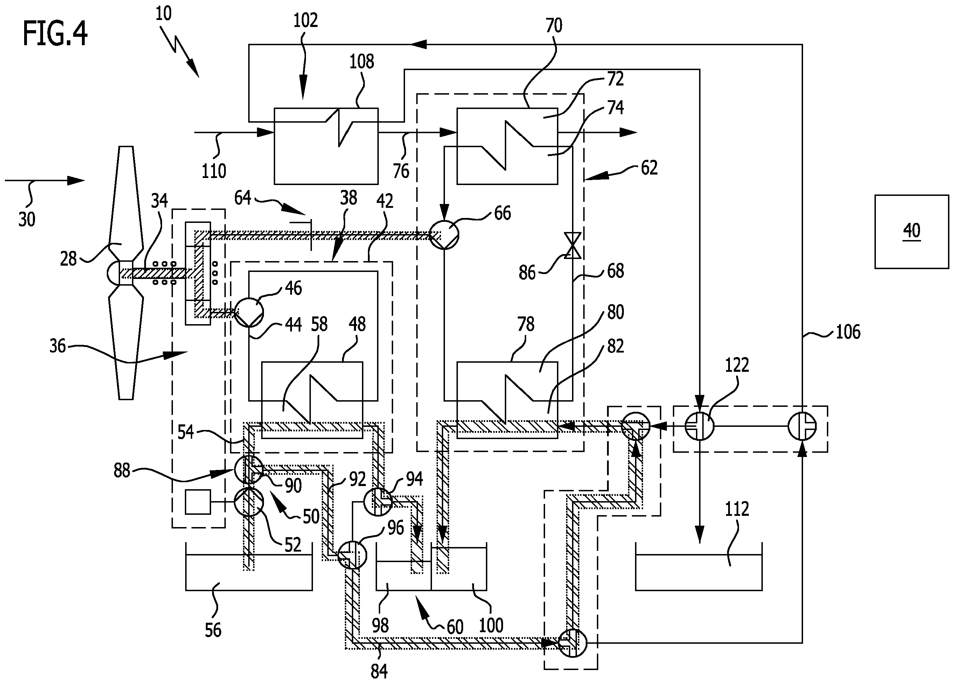

Bei dem Betriebsmodus gemäß Figur 4 wird die Antriebsleistung des Antriebskörpers 28 auf die Wärmepumpeneinrichtung 62 und die Verzögerungseinrichtung 38 aufgeteilt. Die Verzögerungseinrichtung 38 und die Wärmepumpeneinrichtung 62 sind an den Wärmetauschern 48 bzw. 78 parallel mit dem Wärmeträgermedium beaufschlagbar. Zu diesem Zweck kann ein Teil des Wärmeträgermediums den Wärmetauscher 48 durchströmen. Das Ventil 94 ist so geschaltet, dass dieser Teil des Wärmeträgermediums dem Reservoir 60 zugeführt wird. Das Reservoir 60 ist in einen Niedertemperatur-Teilbereich 98 und einen Hochtemperatur-Teilbereich 100 unterteilt. Das den Wärmetauscher 48 durchströmende Wärmeträgermedium strömt in den Niedertemperatur-Teilbereich 98.

Ein weiterer Teil des Wärmeträgermediums strömt durch die Fluidleitung 92 und umgeht dadurch den Wärmetauscher 48. Das Wärmeträgermedium strömt weiter durch die Fluidleitung 84 strömungsabwärts des Ventils 96 und durch den Wärmetauscher 78 hindurch. Im Wärmetauscher 78 wird das Wärmeträgermedium erwärmt und strömt in den Hochtemperatur-Teilbereich 100 des Reservoirs 60.

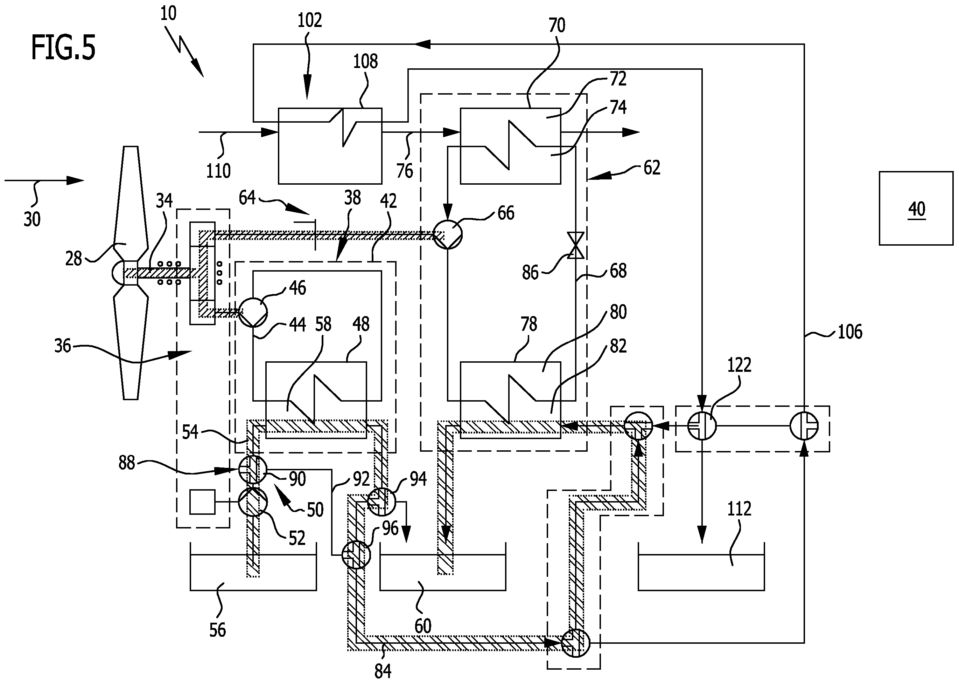

Bei dem Betriebsmodus gemäß Figur 4 besteht gegenüber dem in Figur 3 dargestellten Betriebsmodus der Vorteil, dass unter Einsatz des Retarders 42 die Betriebssicherheit gesteigert werden kann. Insbesondere kann die Drehzahl des Antriebskörpers 28 geregelt werden. Dies gilt auch für die nachfolgend erläuterten Betriebsmodi der Figuren 5 bis 7.

Es besteht in all diesen Szenarien insbesondere die Möglichkeit, die Lastaufteilung im Hinblick auf eine optimale Wärmeleistung und/oder eine möglichst hohe Temperatursteigerung einzustellen, insbesondere zu steuern und/oder zu regeln.

Der Betriebspunkt der Vorrichtung kann dabei jeweils zum einen durch Beeinflussen des Massen- oder Volumenstroms des Wärmeträgermediums und zum anderen über die Lastaufteilung eingestellt werden.

Als vorteilhaft erweist es sich, wenn der Retarder bei dem in Figur 4 dargestellten Betriebsmodus im Verhältnis zur Wärmepumpeneinrichtung 62 gering belastet betrieben wird. Der Massen- oder Volumenstrom des Wärmeträgermediums kann so eingestellt werden, dass die Wärmepumpeneinrichtung 62 realistische und insbesondere zum Beladen thermischer Speicher vorteilhafte Temperaturen erzielen kann. Dies erweist sich als vorteilhaft für ein hohes Temperaturniveau, weswegen im vorliegenden Beispiel die Ausgangsseite des Wärmetauschers 78 dem Hochtemperatur-Teilbereich 100 zugeführt wird.

Die Energie im Niedertemperatur-Teilbereich 98 kann erforderlichenfalls einem weiteren Verbraucher 14 zugeführt werden. Denkbar ist auch eine Rückführung in das Reservoir 56.

Die Leistungszahl hängt bei dem Betriebsmodus gemäß Figur 4 von der Temperatur des Umgebungsmediums 22 ab, weswegen sich dieser Betriebsmodus vorzugsweise zum Einsatz im Sommer eignet.

Bei dem in Figur 5 dargestellten Betriebsmodus besteht der Unterschied zum Betriebsmodus gemäß Figur 4 darin, dass die Verzögerungseinrichtung 38 und die Wärmepumpeneinrichtung 62 seriell mit dem Wärmeträgermedium beaufschlagt werden. Zu diesem Zweck strömt das Wärmeträgermedium durch den Wärmetauscher 48 und anschließend durch die Fluidleitung 84. Das Ventil 94 ist vorzugsweise so geschaltet, dass dem Reservoir 60 das Wärmeträgermedium erst nach zusätzlichem Durchströmen des Wärmetauschers 78 zugeführt wird. Das Reservoir 60 ist in diesem Fall ein Hochtemperatur-Reservoir.

Bei einem derartigen Betriebsmodus erfährt das Wärmeträgermedium zunächst im Retarder 42 einen Temperaturhub. Die Höhe des Temperaturhubes beeinflusst die Leistungszahl der Wärmepumpeneinrichtung 62. Es besteht die Möglichkeit, durch die Lastaufteilung zwischen der Verzögerungseinrichtung 38 und der Wärmepumpeneinrichtung 62 den Temperaturhub und dadurch die Leistungszahl zu beeinflussen. Für eine vorgegebene Lastaufteilung gibt es daher ein Optimum für die insgesamt erzielbare Wärmeleistung. Der Betriebsmodus gemäß Figur 5 ist beispielsweise aufgrund der veränderlichen Leistungszahl für den Winterbetrieb geeignet.

Durchgeführt wurden für die bislang erläuterten Betriebsmodi Abschätzungen der erzielbaren Temperatursteigerung und der erzielbaren Wärmeleistung. Dabei wurden praxisnahe Annahmen für die Antriebsleistung durch den Antriebskörper 28, den Massenstrom des Wärmeträgermediums durch das Pumpaggregat 52 und die Leistungszahl der Wärmepumpeneinrichtung 62 gemacht. Die Leistungszahl wurde für den Solobetrieb gemäß Figur 3 als konstant angenommen, für den Betriebsmodus gemäß Figur 5 als linear abhängig von der Kühlwassertemperatur.

Als Freiheitsgrade wurden zum einen die Aufteilung der Antriebsleistung auf die Verzögerungseinrichtung 38 und die Wärmepumpeneinrichtung 62 und zum anderen die Aufteilung des Massenstroms des Wärmeträgermediums für den Betriebsmodus gemäß Figur 5 bei Parallelbetrieb herangezogen.

Die nachfolgende Tabelle 1 zeigt die Optimierungsergebnisse für die Temperatursteigerung und die erzielbare Wärmeleistung.

Wie bereits erwähnt zeigt es sich, dass bei alleinigem Betrieb der Wärmepumpeneinrichtung 62 (Figur 3) die größtmögliche Wärmeleistung erzielt werden kann, jedoch eher im Sommerbetrieb. Die größtmögliche Temperatursteigerung kann beim Parallelbetrieb gemäß Figur 4 erzielt werden. Die Möglichkeit des seriellen Betriebes gemäß Figur 5 vermag zwar eine insgesamt geringere Wärmeleistung und eine geringere Temperatursteigerung zu erzielen. Durch die Möglichkeit, die Leistungszahl der Wärmepumpeneinrichtung 62 zu beeinflussen, eignet sich dieser Betriebsmodus jedoch zum Beispiel gut für einen Winterbetrieb.

Insgesamt kann über die Steuereinrichtung 40 der Betrieb der Vorrichtung 10 je nach Einsatz und Umgebungsparametern vorteilhaft gesteuert und/oder geregelt werden.

**Tabelle 1:**

| **Figur 2****: Solobetrieb Retarder** | | | |
|---|---|---|---|
| Eingang | Antriebsleistung | 10 | kW |
| | Massenstrom Wärmeträgermedium | 0,1 | kg/s |
| | | | |
| Ausgang | Temperaturhub | 23,8 | K |
| | Wärmeleistung Retarder | 10 | kW |

| **Figur 3****: Solobetrieb Wärmepumpeneinrichtung** | | | |
|---|---|---|---|
| Eingang | Antriebsleistung | 10 | kW |
| | Massenstrom Wärmeträgermedium | 0,1 | kg/s |
| | Leitungszahl Wärmepumpeneinrichtung | 3 | |
| | | | |
| Ausgang | Temperaturhub | 71,4 | K |
| | Wärmeleistung Wärmepumpeneinrichtung | 30 | kW |

| **Figur 4****: Parallelbetrieb Retarder und Wärmepumpe** | | | |
|---|---|---|---|
| Eingang | Anteil Wellenleistung Retarder | 10 | % |
| | Anteil Wellenleistung Wärmepumpeneinrichtung | 90 | % |
| | Anteil Kühlwassermassenstrom Retarder | 50 | % |
| | Anteil Kühlwassermassenstrom Wärmepumpeneinrichtung | 50 | % |
| | Leistungszahl Wärmepumpeneinrichtung | 3 | |
| | | | |
| Ausgang | Temperaturhub Retarder | 4,76 | K |
| | Temperaturhub Wärmepumpeneinrichtung | 129 | K |
| | Wärmeleistung Retarder | 1 | kW |
| | Wärmeleistung Wärmepumpeneinrichtung | 27 | kW |

| **Figur 5****: serieller Betrieb Retarder und Wärmepumpe** | | | |
|---|---|---|---|
| Eingang | Anteil Wellenleistung Retarder | 50 | % |
| | Anteil Wellenleistung Wärmepumpeneinrichtung | 50 | % |
| | Leistungszahl Wärmepumpeneinrichtung | 2,49 | |
| | | | |
| Ausgang | Temperaturhub Retarder | 12 | K |
| | Temperaturhub Wärmepumpeneinrichtung | 30 | K |
| | Temperaturhub gesamt | 42 | K |
| | Wärmeleistung Retarder | 5,00 | kW |
| | Wärmeleistung Wärmepumpeneinrichtung | 12,44 | kW |
| | Wärmeleistung gesamt | 17,44 | kW |

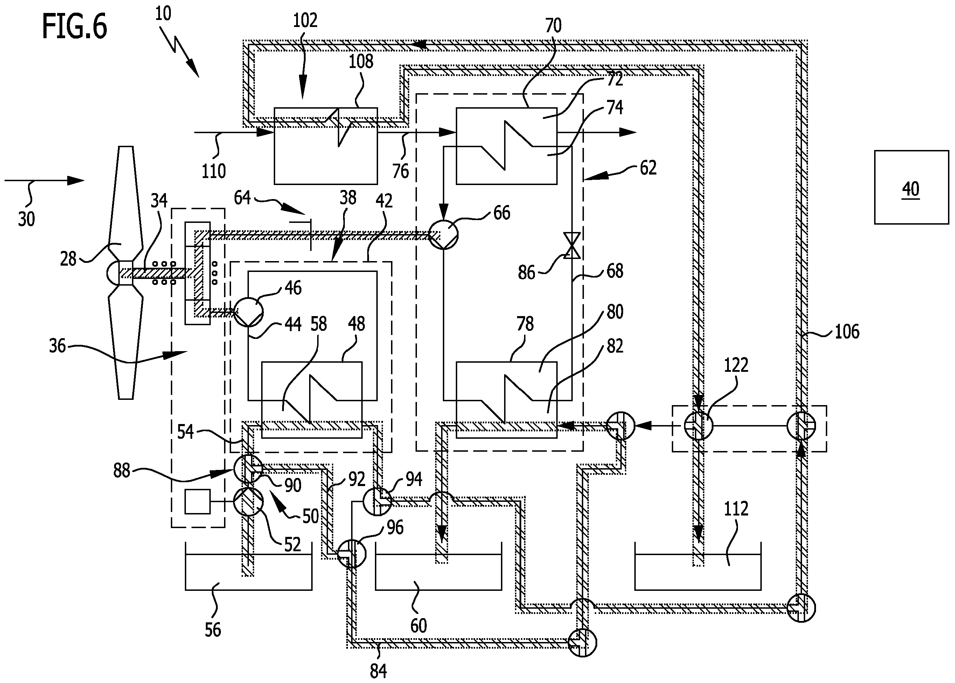

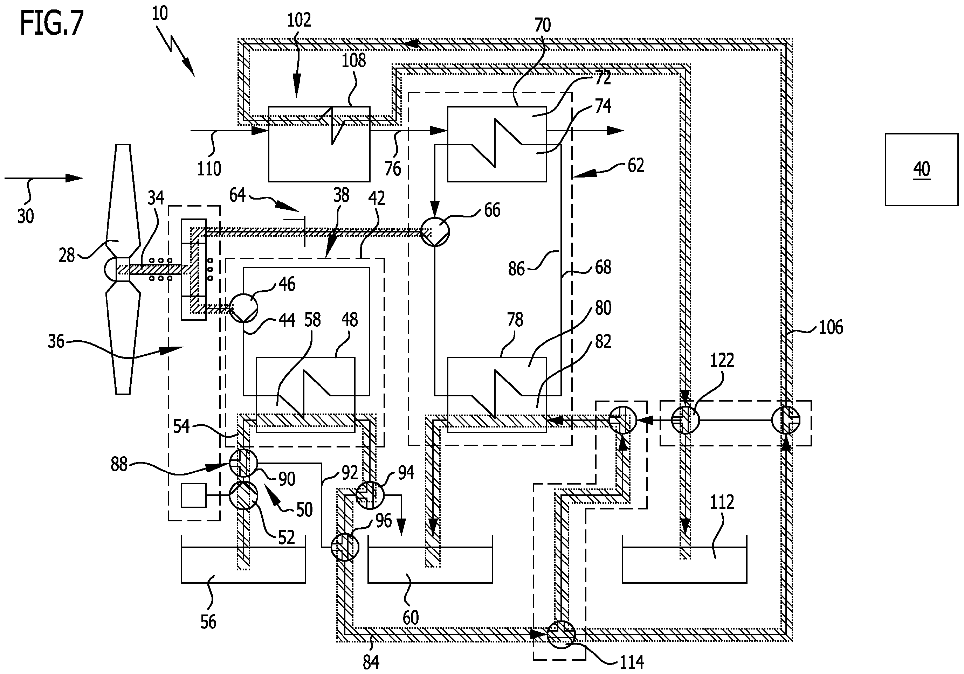

Wie nachfolgend unter Verweis auf die Figuren 6 und 7 erläutert wird, umfasst die Vorrichtung 10 vorteilhafterweise eine Heizeinrichtung 102 zum Beheizen des Umgebungsmediums 22 vor Eintritt in die Wärmepumpeneinrichtung 62. Dabei entspricht der in Figur 6 dargestellte Betriebsmodus im Wesentlichen demjenigen der Figur 4 mit dem Parallelbetrieb der Verzögerungseinrichtung 38 und der Wärmepumpeneinrichtung 62 unter Nutzung der Heizeinrichtung 102. Der in Figur 7 dargestellte Betriebsmodus entspricht demjenigen der Figur 5 mit seriellem Betrieb der Verzögerungseinrichtung 38 und der Wärmepumpeneinrichtung 62.

Die Vorrichtung 10 umfasst für den Betriebsmodus gemäß Figur 6 (nur darin dargestellt) eine von der Fluidleitung 92 am Ventil 94 abzweigende Fluidleitung 106. Die Fluidleitung 106 ermöglicht eine Strömungsverbindung des Wärmeträgermediums vom Retarder 42 mit der Heizeinrichtung 102.

Über das Ventil 94 kann das durch den Retarder 42 strömende Wärmeträgermedium in die Fluidleitung 106 geleitet werden, die der Heizeinrichtung 102 das vorgewärmte Wärmeträgermedium zuführt.

Die Heizeinrichtung 102 umfasst einen Wärmetauscher 108, in den das Umgebungsmedium 22 (Pfeil 110) strömen kann. Ausgangsseitig führt die Fluidleitung 106 zu einem Reservoir 112. Da das Wärmeträgermedium Wärme an das Umgebungsmedium 22 abgibt, ist das Reservoir 112 ein Niedertemperatur-Reservoir.

Bei dem Betriebsmodus gemäß Figur 6 kann die Abwärme des Retarders 42 dazu eingesetzt werden, das Umgebungsmedium 22 zu erwärmen. Infolgedessen steigt die Leistungszahl der Wärmepumpeneinrichtung 62, so dass sich der Betriebsmodus gemäß Figur 5 auch für den Winterbetrieb eignet. Über die Lastaufteilung zwischen der Verzögerungseinrichtung 38 und der Wärmepumpeneinrichtung 62 sowie die Aufteilung des Massen- oder Volumenstroms kann ein optimaler Betriebspunkt eingestellt werden.

Für den Betriebsmodus gemäß Figur 7 (nur darin dargestellt) zweigt von der Fluidleitung 92 an einem Ventil 114 die Fluidleitung 106 ab, die mit der Eingangsseite des Wärmetauschers 108 verbunden ist. Bei der Kombination der Heizeinrichtung 102 mit dem seriellen Betrieb wird zunächst durch den Retarder 42 das gesamte Wärmeträgermedium geführt. Ein Teilstrom wird der Heizeinrichtung 102 zugeführt, der verbleibende Teilstrom der Wärmepumpeneinrichtung 62.

Es zeigt sich, dass mehrere Kombinationen der Lastaufteilung und der Aufteilung des Wärmeträgermediums am Ventil 114 zu hohen Wärmeleistungen an der Wärmepumpeneinrichtung 62 führen. Auch der Betriebsmodus gemäß Figur 7 ist dabei in Folge der Möglichkeit, die Leistungszahl der Wärmepumpeneinrichtung 62 einzustellen, robust gegen veränderliche Umgebungsbedingungen.

In den Szenarien der Figuren 6 und 7 können am Retarder 42 die Temperatursteigerung und hierüber die Beheizung des Umgebungsmediums 22 an der Heizeinrichtung 102 eingestellt werden. Dadurch kann die Leistungszahl der Wärmepumpeneinrichtung 62 beeinflusst werden. Insgesamt ergeben sich dadurch sowohl Möglichkeiten, die Temperatursteigerung als auch die Wärmeleistung einzustellen.

Darüber hinaus weisen die Betriebsmodi der Figuren 6 und 7 ein Hochtemperatur-Reservoir 60 und ein Niedertemperatur-Reservoir 112 auf. Je nach Einsatz kann das Reservoir 112 mit dem Reservoir 56 strömungsverbunden sein oder einem unterschiedlichen Verbraucher 14 Wärme als aus dem Reservoir 60 zuführen.

Die nachfolgende Tabelle 2 zeigt unter den oben genannten Annahmen für die Betriebsparameter der Vorrichtung 10 bevorzugte Aufteilungen der Leistung des Antriebskörpers 28 sowie des Massen- oder Volumenstroms des Wärmeträgermediums (für den Betriebsmodus der Figur 7) und darauf basierend die erzielbare Temperatursteigerung und die erzielbare Wärmeleistung.

**Tabelle 2:**

| **Figur 6****: Parallelbetrieb Retarder zur Vorwärmung der Wärmepumpe** | | | |
|---|---|---|---|
| Eingang | Anteil Wellenleistung Retarder | 47 | % |
| | Anteil Wellenleistung Wärmepumpeneinrichtung | 53 | % |
| | Anteil Kühlwassermassenstrom Retarder | 50 | % |
| | Anteil Kühlwassermassenstrom Wärmepumpeneinrichtung | 50 | % |
| | Leistungszahl Wärmepumpeneinrichtung | 4,92 | |
| | | | |
| Ausgang | Temperaturhub Retarder | 22,4 | K |
| | Temperaturhub Wärmepumpeneinrichtung | 124 | K |
| | Wärmeleistung Retarder | 4,7 | kW |
| | Wärmeleistung Wärmepumpeneinrichtung | 26,1 | kW |

| **Figur 7****: Kombinierter serieller Betrieb/Parallelbetrieb Retarder + Wärmepumpeneinrichtung und Vorwärmung** | | | |
|---|---|---|---|
| Eingang | Anteil Wellenleistung Retarder | 40 | % |
| | Anteil Wellenleistung Wärmepumpeneinrichtung | 60 | % |
| | Anteil Kühlwassermassenstrom Retarder | 100 | % |
| | Anteil Kühlwassermassenstrom Vorwärmer | 63 | % |
| | Anteil Kühlwassermassenstrom Wärmepumpeneinrichtung | 38 | % |
| | Leistungszahl Wärmepumpeneinrichtung | 3,08 | |
| | | | |
| Ausgang | Temperaturhub Retarder | 9,52 | K |
| | Temperaturhub Wärmepumpeneinrichtung | 127 | K |
| | Wärmeleistung Retarder | 4 | kW |
| | Wärmeleistung Retarder → Vorwärmer | 2,5 | kW |
| | Wärmeleistung Wärmepumpeneinrichtung | 20 | kW |

Für thermische Speicher erweist sich insbesondere eine hohe Temperatur des Wärmeträgermediums als vorteilhaft. In der Praxis ist es allerdings nicht unbedingt erforderlich, obwohl dies gleichwohl vorgesehen sein kann, die Wärmespeichereinrichtung 24 möglichst schnell aufzuladen. Vorteilhaft kann daher sein, dass nur ein Teil der Antriebsleistung des Antriebskörpers 28 auf hohem Temperaturniveau bereitgestellt wird. Hierfür erweisen sich beispielsweise die Betriebsmodi der Figuren 4 und 6 als vorteilhaft. Es besteht insbesondere die Möglichkeit, das Temperaturniveau ausgangsseitig der Wärmepumpeneinrichtung 62 zu regeln, indem die Aufteilung des Volumen- oder Massenstroms des Wärmeträgermediums am Ventil 90 eingestellt wird.

Obige Beispielrechnungen legen eine Aufteilung des Stromes des Wärmeträgermediums zugrunde, dass an der Wärmepumpeneinrichtung 62 im Vergleich zum Retarder 42 der deutlich höhere Temperaturhub erfolgt. Das auf niedrigerer Temperatur liegende Wärmeträgermedium, das dem Niedertemperatur-Teilbereich 98 bzw. dem Reservoir 112 zugeführt wird, kann wie erwähnt in das Reservoir 56 zurückgeführt werden oder einem andersartigen Verbraucher zugeführt werden als das Wärmeträgermedium ausgangsseitig der Wärmepumpeneinrichtung 62.

Die Heizeinrichtung 102 und der Wärmetauscher 70 sind bei der Vorrichtung 10 wie bislang erläutert in Reihe geschaltet. Dadurch wird zunächst auf das Umgebungsmedium 22 Wärme übertragen, die anschließend im Verdampfer 72 auf das Arbeitsfluid im Kreislauf 68 übertragen wird.

Vorgesehen sein kann, dass die Heizeinrichtung 102 auf der Kaltseite 74 baulich mit dem Wärmetauscher 70 integriert ist.

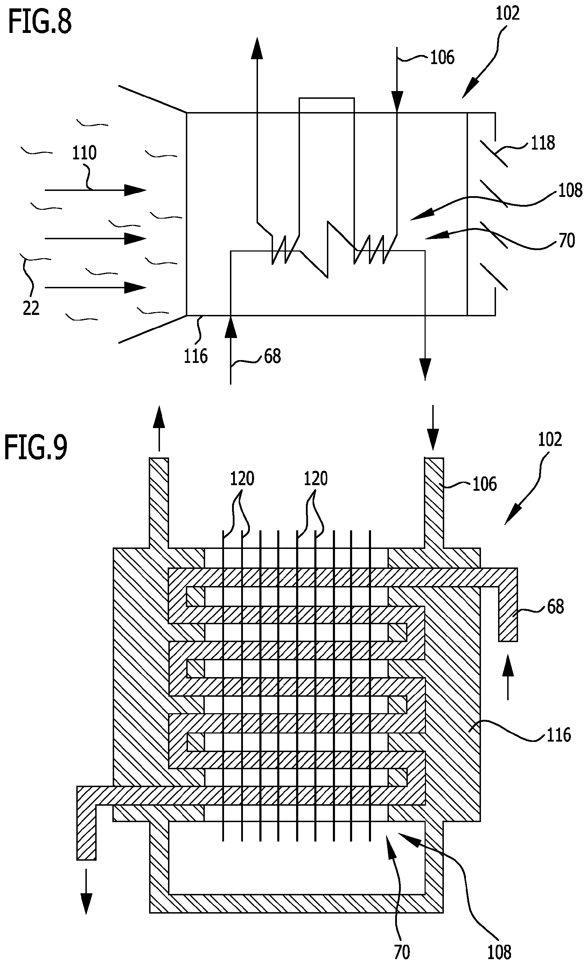

Figur 8 zeigt dies in schematischer Darstellung. Der Volumenstrom des Umgebungsmediums 22 strömt in ein Gehäuse 116. Das Gehäuse 116 kann Einstellelemente 118 aufweisen, die von der Steuereinrichtung 40 ansteuerbar sind. Dies gibt die Möglichkeit, den Volumenstrom einzustellen, insbesondere zu steuern und zu regeln. Sichergestellt werden kann, dass die zugeführte Wärme nicht an die Umgebung abfließt.

In konstruktiver Umsetzung können im Gehäuse 116 beispielsweise Lamellen 120 vorgesehen sein. Abschnitte der Lamellen können vom Wärmeträgermedium, das vom Retarder 42 zufließt, überströmt werden. Zusätzlich durchsetzt der Kreislauf 68 die Lamellen 120 und den durchströmten Raum, um dem aufgewärmten Umgebungsmedium 22 Wärme zu entziehen. Vorteilhaft kann es sein, dass der Kreislauf 68 zumindest abschnittsweise in thermischem Kontakt mit dem Wärmeträgermedium steht, indem der Kreislauf 68 zumindest abschnittsweise abgrenzend an die Fluidleitung 106 geführt ist (Figur 9).

Vorgesehen sein kann, dass die Heizeinrichtung 102 mit erwärmten Wärmeträgermedium aus der Wärmepumpeneinrichtung 62 beaufschlagt wird (nicht dargestellt). Die Strömungseinrichtung kann beispielsweise eine Fluidleitung und ein Ventil vorsehen, um das Wärmeträgermedium von der Ausgangsseite der Wärmepumpeneinrichtung 62 zur Fluidleitung 106 oder direkt zur Heizeinrichtung 102 zu führen.

Vorgesehen sein kann, dass das Wärmeträgermedium nach dem Austritt aus der Heizeinrichtung 102 über ein Ventil 122 und eine diesbezügliche Fluidleitung zur Warmseite 82 der Wärmepumpeneinrichtung 62 geführt wird. Je nach an der an der Heizeinrichtung 102 entnommener oder nicht entnommener Wärmeleistung kann etwaiges Wärmeträgermedium mit Restwärme dem Reservoir 60 nach erneutem Temperaturhub an der Wärmepumpeneinrichtung 62 zugeführt werden.

### Bezugszeichenliste:

- 10: Wärmegewinnungsvorrichtung
- 12: Energiesystem
- 14: Verbraucher
- 16: Schaft
- 18: Boden
- 20: Gehäuse
- 22: Umgebungsmedium
- 24: Wärmespeichereinrichtung
- 26: Heizanlage
- 28: Antriebskörper
- 30: Pfeil
- 32: Rotor
- 34: Antriebswelle
- 36: Getriebeeinrichtung
- 38: Verzögerungseinrichtung
- 40: Steuereinrichtung
- 42: Retarder
- 44: Kreislauf
- 46: Pumpaggregat
- 48: Wärmetauscher
- 50: Strömungseinrichtung
- 52: Pumpaggregat
- 54: Fluidleitung
- 56: Reservoir
- 58: Warmseite
- 60: Reservoir
- 62: Wärmepumpeneinrichtung
- 64: Kupplungseinrichtung
- 66: Pumpaggregat
- 68: Kreislauf
- 70: Wärmetauscher
- 72: Verdampfer
- 74: Kaltseite
- 76: Pfeil
- 78: Wärmetauscher
- 80: Kondensator
- 82: Warmseite
- 84: Fluidleitung
- 86: Entspannungsventil
- 88: Ventileinrichtung
- 90: Ventil
- 92: Fluidleitung
- 94: Ventil
- 96: Ventil
- 98: Niedertemperatur-Teilbereich
- 100: Hochtemperatur-Teilbereich
- 102: Heizeinrichtung
- 106: Fluidleitung
- 108: Wärmetauscher
- 110: Pfeil
- 112: Reservoir
- 114: Ventil
- 116: Gehäuse
- 118: Einstellelemente
- 120: Lamelle
- 122: Ventil

## Patentansprüche

1. Wärmegewinnungsvorrichtung, umfassend einen mittels eines Umgebungsmediums (22) infolge einer Relativbewegung des Umgebungsmediums (22) und der Wärmegewinnungsvorrichtung (10) angetriebenen Antriebskörper (28), eine mit dem Antriebskörper (28) insbesondere mechanisch gekoppelte Verzögerungseinrichtung (38) und eine mit dem Antriebskörper (28) über eine Kupplungseinrichtung (64) insbesondere mechanisch gekoppelte Wärmepumpeneinrichtung (62), eine Strömungseinrichtung (50) zum Führen eines Wärmeträgermediums, das zum Aufnehmen von Wärme in thermischem Kontakt mit der Verzögerungseinrichtung (38) und der Wärmepumpeneinrichtung (62) steht oder bringbar ist, wobei die Wärme einem Verbraucher (14) direkt oder indirekt zuführbar ist, und eine mit der Kupplungseinrichtung (64) und der Strömungseinrichtung (50) in Wirkverbindung stehende Steuereinrichtung (40) zum Steuern und/oder Regeln des Betriebs der Wärmegewinnungsvorrichtung (10).

2. Wärmegewinnungsvorrichtung nach Anspruch 1, **dadurch gekennzeichnet, dass** die Wärmepumpeneinrichtung (62) über die Kupplungseinrichtung und die Verzögerungseinrichtung (38) und/oder die Strömungseinrichtung selektiv koppelbar sind.

3. Wärmegewinnungsvorrichtung nach Anspruch 1 oder 2, **dadurch gekennzeichnet, dass** über die Kupplungseinrichtung (64) ein Verhältnis der Antriebsleistung für die Wärmepumpeneinrichtung (62) und der Verzögerungseinrichtung (38) einstellbar und insbesondere steuerbar und/oder regelbar ist.

4. Wärmegewinnungsvorrichtung nach einem der voranstehenden Ansprüche, **dadurch gekennzeichnet, dass** zumindest eines der Folgenden gilt:
- der Betrieb der Wärmegewinnungsvorrichtung (10) ist abhängig von einer Antriebsleistung des Antriebskörpers (28) steuerbar und/oder regelbar;
- der Betrieb der Wärmegewinnungsvorrichtung (10) ist abhängig von einer Temperatur des Umgebungsmediums (22) und/oder einer Relativgeschwindigkeit zum Umgebungsmedium (22) steuerbar und/oder regelbar.

5. Wärmegewinnungsvorrichtung nach einem der voranstehenden Ansprüche, **dadurch gekennzeichnet, dass** zumindest eines der Folgenden gilt:
- der Betrieb der Wärmegewinnungsvorrichtung (10) ist im Hinblick auf eine vorgebbare oder möglichst hohe Temperatur oder eine möglichst hohe Temperatursteigerung des Wärmeträgermediums nach Durchgang durch die Verzögerungseinrichtung und/oder durch die Wärmepumpeneinrichtung steuerbar und/oder regelbar;
- der Betrieb der Wärmegewinnungsvorrichtung (10) ist im Hinblick auf eine vorgebbare oder möglichst hohe Wärmeleistung durch das Wärmeträgermedium nach Durchgang durch die Verzögerungseinrichtung (38) und/oder durch die Wärmepumpeneinrichtung (62) steuerbar und/oder regelbar.

6. Wärmegewinnungsvorrichtung nach einem der voranstehenden Ansprüche, **dadurch gekennzeichnet, dass** die Strömungseinrichtung (50) eine Fördereinrichtung (52) umfasst und dass ein Massen- oder Volumenstrom des Wärmeträgermediums einstellbar ist, insbesondere steuerbar und/oder regelbar ist.

7. Wärmegewinnungsvorrichtung nach einem der voranstehenden Ansprüche, **dadurch gekennzeichnet, dass** die Strömungseinrichtung (50) eine Ventileinrichtung (88) mit mindestens einem von der Steuereinrichtung (40) betätigbaren Ventil (90, 94, 96, 114) umfasst, mit dem eine Fluidverbindung zur Verzögerungseinrichtung (38) und/oder zur Wärmepumpeneinrichtung (62) wahlweise freigebbar oder sperrbar ist.

8. Wärmegewinnungsvorrichtung nach Anspruch 7, **dadurch gekennzeichnet, dass** das mindestens eine Ventil (90, 94, 96, 114) derart betätigbar ist, dass die Verzögerungseinrichtung (38) und die Wärmepumpeneinrichtung (62) seriell mit dem Wärmeträgermedium beaufschlagbar sind, und/oder dass das mindestens eine Ventil (90, 94, 96, 114) derart betätigbar ist, dass die Verzögerungseinrichtung (38) und die Wärmepumpeneinrichtung (62) parallel mit dem Wärmeträgermedium beaufschlagbar sind.

9. Wärmegewinnungsvorrichtung nach Anspruch 7 oder 8, **dadurch gekennzeichnet, dass** über mindestens ein Ventil (90, 94, 96, 114) ein Verhältnis des Massen- oder Volumenstroms des Wärmeträgermediums einstellbar und insbesondere steuerbar und/oder regelbar ist, mit dem die Verzögerungseinrichtung (38) und die Wärmeträgereinrichtung (62) beaufschlagbar ist.

10. Wärmegewinnungsvorrichtung nach einem der voranstehenden Ansprüche, **dadurch gekennzeichnet, dass** die Wärmegewinnungsvorrichtung (10) eine Heizeinrichtung (102) für das der Wärmepumpeneinrichtung (62) zugeführte Umgebungsmedium (22) umfasst und/oder eine mit dem erwärmten Wärmeträgermedium beaufschlagbare Wärmespeichereinrichtung (24).

11. Wärmegewinnungsvorrichtung nach Anspruch 10, **dadurch gekennzeichnet, dass** die Strömungseinrichtung (50) die Heizeinrichtung (102) mit einer Ausgangsseite der Verzögerungseinrichtung (38) und/oder mit einer Ausgangsseite der Wärmepumpeneinrichtung (62) koppelt zur thermischen Kopplung des Umgebungsmediums (22) und des Wärmeträgermediums, und dass die Ventileinrichtung (88) vorzugsweise ein Ventil (90, 94, 96, 114) umfasst, über das eine Strömungsverbindung von der Verzögerungseinrichtung (38) und/oder der Wärmepumpeneinrichtung (62) zur Heizeinrichtung (102) selektiv freigebbar und sperrbar ist.

12. Wärmegewinnungsvorrichtung nach Anspruch 10 oder 11, **dadurch gekennzeichnet, dass** die Strömungseinrichtung (50) eine Ausgangsseite der Heizeinrichtung (102) mit der Wärmepumpeneinrichtung (62) koppelt zur thermischen Kopplung der Wärmepumpeneinrichtung (62) und des Wärmeträgermediums, und dass die Ventileinrichtung (88) vorzugsweise ein Ventil (90, 94, 96, 114) umfasst, über das eine Strömungsverbindung von der Heizeinrichtung (102) zur Wärmepumpeneinrichtung (62) selektiv freigebbar und sperrbar ist.

13. Wärmegewinnungsvorrichtung nach einem der voranstehenden Ansprüche, **gekennzeichnet durch** einen Betriebsmodus, beim dem die Wärmepumpeneinrichtung (62) vom Antriebskörper (28) entkoppelt ist, und/oder durch einen Betriebsmodus, beim dem die Verzögerungseinrichtung (38) vom Antriebskörper (28) entkoppelt ist.

14. Wärmegewinnungsvorrichtung nach einem der voranstehenden Ansprüche, **gekennzeichnet durch** einen jeweiligen Betriebsmodus, beim dem die Wärmepumpeneinrichtung (62) und die Verzögerungseinrichtung (38) mit dem Antriebskörper (28) gekoppelt ist und bei dem das Wärmeträgermedium die Verzögerungseinrichtung (38) und die Wärmepumpeneinrichtung (62) seriell oder parallel beaufschlagt, und/oder **gekennzeichnet durch** einen Betriebsmodus, bei dem das Umgebungsmedium (22) mittels einer Heizeinrichtung (102) der Wärmegewinnungsvorrichtung (10) über das Wärmeträgermedium erwärmt wird.

15. Verfahren zum Betreiben einer Wärmegewinnungsvorrichtung, bei der ein Antriebskörper infolge einer Relativbewegung zu einem Umgebungsmedium angetrieben und mit einer Verzögerungseinrichtung sowie über eine Kupplungseinrichtung mit einer Wärmepumpeneinrichtung gekoppelt ist, wobei die Verzögerungseinrichtung und die Wärmepumpeneinrichtung mittels eines Wärmeträgermediums beaufschlagbar sind, wobei das Wärmeträgermedium mittels einer Strömungseinrichtung geführt wird, und wobei über eine mit der mit der Kupplungseinrichtung und der Strömungseinrichtung in Wirkverbindung stehende Steuereinrichtung der Betrieb der Wärmegewinnungsvorrichtung gesteuert und/oder geregelt wird.
